# EUROPÄISCHE PATENTSCHRIFT

(11) **EP 4 220 462 B1**
(45) Veröffentlichungstag und Bekanntmachung des Hinweises auf die Patenterteilung: **27.11.2024**
(21) Anmeldenummer: 23155836.2
(22) Anmeldetag: 18.01.2013
(51) Int. Cl.: G06F 21/57, G06F 21/73, G06F 21/86, H04W 4/00

(54) **VERFAHREN ZUR PERSONALISIERUNG EINER SMART METER VORRICHTUNG MIT EINEM SICHERHEITSMODUL**
METHOD FOR PERSONALIZING A SMART METER DEVICE WITH A SECURITY MODULE
PROCÉDÉ DE PERSONNALISATION D'UN DISPOSITIF DE COMPTEUR INTELLIGENT COMPRENANT UN MODULE DE SÉCURITÉ

(30) Priorität: 07.02.2012 DE 102012201810; 28.02.2012 DE 102012203034
(43) Veröffentlichungstag der Anmeldung: 02.08.2023
(62) Teilanmeldung aus: 13702195.2
(73) Patentinhaber: Bundesdruckerei GmbH, 10969 Berlin (DE)
(72) Erfinder: DIETRICH, Frank, 12437 Berlin (DE); PAESCHKE, Manfred, 16348 Wandlitz (DE)
(74) Vertreter: Richardt Patentanwälte PartG mbB

(56) Entgegenhaltungen:
- WO-A2-01/59544
- US-A1- 2005 033 701
- US-A1- 2005 039 040
- US-A1- 2007 138 657
- US-B1- 7 830 021
- "Technische Richtlinie BSI TR‐03109 Version 0.20", 10 October 2011 (2011-10-10), XP055059493, Retrieved from the Internet <URL:https://www.internet-sicherheit.de/institut/service/glossar/allgemeine-studien/bsi-studien/?eID=dam_frontend_push&docID=2640> [retrieved on 20130412]
- "Technische Richtlinie TR-03109 Anhang A Version 0.20", 10 October 2011 (2011-10-10), XP055059483, Retrieved from the Internet <URL:http://www.internet-sicherheit.de/institut/service/glossar/allgemeine-studien/bsi-studien/?eID=dam_frontend_push&docID=2641> [retrieved on 20130412]
- "TECHNISCHE RICHTLINIE BSI TR-03109 Anhang B", 24 November 2011 (2011-11-24), XP055059481, Retrieved from the Internet <URL:https://www.internet-sicherheit.de/institut/service/glossar/allgemeine-studien/bsi-studien/?eID=dam_frontend_push&docID=2642> [retrieved on 20130412]
- "Technische Richtlinie TR-03109 Anhang C Version 0.20", 10 October 2011 (2011-10-10), XP055059491, Retrieved from the Internet <URL:http://www.internet-sicherheit.de/institut/service/glossar/allgemeine-studien/bsi-studien/?eID=dam_frontend_push&docID=2643> [retrieved on 20130412]
- "Protection Profile for the Gateway of a Smart Metering System - BSI-CC-PP-0073 - v01.01.01(final draft)", 26 August 2011 (2011-08-26), XP055059495, Retrieved from the Internet <URL:http://web.archive.org/web/20111212205642/https://www.bsi.bund.de/SharedDocs/Downloads/DE/BSI/SmartMeter/PP-SmartMeter.pdf?__blob=publicationFile> [retrieved on 20130412]
- "ETSI TS 122 022 V10.0.0", 11 May 2011 (2011-05-11), XP055060516, Retrieved from the Internet <URL:http://www.etsi.org/deliver/etsi_ts/122000_122099/122022/10.00.00_60/ts_122022v100000p.pdf> [retrieved on 20130422]

## Beschreibung

Die Erfindung betrifft ein Verfahren zur Personalisierung einer Smart Meter Vorrichtung mit einem Sicherheitsmodul, ein Computerprogrammprodukt, ein Sicherheitsmodul und eine Smart Meter Vorrichtung.

Unter dem Begriff des "Smart Metering" wird allgemein der Gedanke verstanden, Kunden mit elektronischen Energieverbrauchserfassungsgeräten auszustatten, um so neben einer einfachen Erfassung der verbrauchten Energiemenge zum Beispiel über ein Netzwerk sowohl dem Kunden als auch dem Energieversorger weitere Funktionalitäten zur Verfügung zu stellen.

Möglich ist dabei, dass sich der Kunde in Echtzeit über seinen aktuellen Energieverbrauch informieren kann. Unter dem Begriff des "Energieverbrauchs" wird dabei der Verbrauch des Kunden bezüglich jeglicher Art von Energie verstanden, welche in Haushalte und Unternehmen geliefert wird. Dies umfasst neben den Energieformen Strom, Wasser und Gas auch beliebige weitere Energieformen wie beispielsweise Fernwärme.

Zur Erfassung des Energieverbrauchs kommen beim jeweiligen Verbraucher intelligente Messsysteme, auch intelligente Zähler oder "Smart-Meter" genannt, zum Einsatz. Smart-Meter sind Zähler für die verbrauchte Energie. Der Verbraucher kann dabei eine natürliche oder juristische Person sein, welche verschiedene messbare Energieformen wie Strom, Gas, Wasser oder Wärme verbraucht. Ziel der Verwendung von Smart-Metern ist die Implementierung intelligenter Messsysteme, was beispielsweise die Erhebung von variablen Leistungsentgelten in Abhängigkeit von Gesamtnachfrage und Netzauslastung ermöglichen würde. Dadurch können sich Energieversorgungsnetze insgesamt besser ausnutzen lassen.

Aus der technischen Richtlinie des BSI TR-03109 ist es bekannt, einen sogenannten Smart-Meter-Gateway, auch Konzentrator genannt, als eine zentrale Kommunikationseinheit vorzusehen, welche mit einzelnen oder mehreren Smart-Metern kommunizieren kann. Der Gateway ist dazu in der Lage, mit Geräten im sogenannten "Home Area Network" und mit Geräten im "Wide Area Network" zu kommunizieren. Das Home Area Network umfasst dabei alle Smart Meter, welche an den Gateway angekoppelt sind, sowie z.B. private Recheneinheiten der Verbraucher. Die privaten Recheneinheiten können z.B. zur Information über aktuelle, mit den Smart Metern erfasste Energieverbrauchswerte, eingesetzt werden. Das Wide Area Network ist dazu ausgebildet, um eine Kommunikation von Gateway und autorisierten Marktteilnehmern zu ermöglichen. Beispielsweise kann das Gateway die Daten aller Smart-Meter sammeln und diese an eine übergeordnete Sammelstelle, beispielsweise einen Energieversorger oder einen Messstellenbetreiber zur Verfügung stellen.

Aus US 2005/039040 A1 (RANSOM DOUGLAS S [CA] ET AL) 17. Februar 2005 (2005-02-17) ist ein System und Verfahren zum Erkennen und Reagieren auf Gerätemanipulationen in einem Energiemanagementgerät ("EM") bekannt. Das EM-Gerät ist mit Mechanismen zum Erkennen unbefugter Manipulationen am Gerät ausgestattet. Darüber hinaus kann das Gerät als Reaktion auf erkannte unbefugte Manipulationen Maßnahmen ergreifen, um die Integrität der vom Gerät generierten Daten sowie alle im Gerät gespeicherten vertraulichen Daten zu schützen. Zu solchen Maßnahmen gehört insbesondere das Löschen bzw. Deaktivieren von Daten, die für eine sichere Netzwerkkommunikation notwendig sind.

Aus US 2005/033701 A1 (CHALLENER DAVID C [US] ET AL) 10. Februar 2005 (2005-02-10) ist ein zentrales System zum Empfangen von Berichten über den Verbrauch von Versorgungsleistungen von einer Reihe von entfernten Zählern bekannt. Es wird sichergestellt, dass ein empfangener Bericht tatsächlich von einem Zähler übermittelt wurde, der beim zentralen System registriert wurde. Während des Registrierungsvorgangs übermittelt der Zähler seinen öffentlichen kryptografischen Code an das zentrale System. Mit jedem Bericht über den Verbrauch von Versorgungsleistungen sendet der Zähler eine Version einer mit seinem privaten kryptografischen Schlüssel verschlüsselten Nachricht. Das zentrale System entschlüsselt diese Nachricht mit dem öffentlichen Schlüssel des Zählers. Wenn sie mit einer unverschlüsselten Version der Nachricht übereinstimmt, ist bekannt, dass der Zähler den Bericht gesendet hat. Die unverschlüsselte Nachricht kann vom zentralen System generiert und in einer Berichtsanforderung an den Zähler übermittelt werden, oder sie kann vom Zähler generiert und zusammen mit der verschlüsselten Version gesendet werden. Im Falle einer Manipulation werden Daten, die für eine sichere Netzwerkkommunikation notwendig sind, gelöscht bzw. deaktiviert.

Der Erfindung liegt die Aufgabe zugrunde, ein Verfahren zur Personalisierung einer Smart Meter Vorrichtung mit einem Sicherheitsmodul, ein Computerprogrammprodukt, ein Sicherheitsmodul und eine Smart Meter Vorrichtung, bereitzustellen.

Die der Erfindung zugrunde liegenden Aufgaben werden mit den Merkmalen der unabhängigen Patentansprüche gelöst. Bevorzugte Ausführungsformen der Erfindung sind in den abhängigen Patentansprüchen angegeben.

Es wird ein Verfahren zur Personalisierung einer Smart Meter Vorrichtung mit einem Sicherheitsmodul angegeben, wobei das Sicherheitsmodul als Kommunikationsschnittstelle der Vorrichtung mit einem externen Computersystem ausgebildet ist, wobei in dem Sicherheitsmodul eine eindeutige Kennung gespeichert ist, wobei das Verfahren ein untrennbares Verbinden des Sicherheitsmoduls mit der Vorrichtung umfasst, wobei nach dem Verbinden die Vorrichtung durch die eindeutige Kennung identifizierbar ist.

Ausführungsformen der Erfindung könnten den Vorteil haben, dass durch den Personalisierungsvorgang in dauerhafter Weise der Vorrichtung eine eindeutige Identität zugewiesen werden kann. Hierzu ist es nicht notwendig, z.B. die Vorrichtung selbst bei einem Herstellungsprozess mit einer Identität zu versehen. Dies wäre insbesondere im Hinblick auf zu erfüllende Sicherheitsanforderungen beim Herstellungsprozess mit hohen Kosten und hohem technischen Aufwand verbunden. Denn typischerweise ist die Vergabe von Identitäten an eine besonders gesicherte Produktionsumgebung gekoppelt, z.B. einem sogenannten Trust Center. Dies könnte insbesondere bei der Vergabe von Identitäten zu gebührentechnischen Erhebungen bezüglich der mit dem der Vorrichtung zugeordneten Smart Meter erfassten Energieverbrauchswerte erforderlich sein. Durch die irreversible Verbindung der Vorrichtung mit einem separat erhältlichen Sicherheitsmodul genügt es, lediglich das Sicherheitsmodul in der gesicherten Produktionsumgebung herzustellen und mit der Identität zu versehen. Die nachfolgende Kopplung von Sicherheitsmodul und Vorrichtung versieht die Vorrichtung dann mit derselben Identität, die auch dem Sicherheitsmodul zugewiesen wurde. Da außerdem das Sicherheitsmodul als Kommunikationsinterface für externe Computersysteme dient, ist sichergestellt, dass ein entsprechender Kommunikationsvorgang von z.B. Verbrauchsdaten an Messstellenbetreiber und/oder Energieversorger immer die identitätsstiftende Komponente "Sicherheitsmodul" einbezieht. Z.B. kann das Sicherheitsmodul in diesem Fall sicherstellen, dass übermittelte Daten grundsätzlich auch die eindeutige Kennung "Globally Unique Identifier" (GUID) aufweisen. Somit ist immer eine eindeutige Identifizierung der Vorrichtung in beliebigen Kommunikationsnetzwerken möglich.

Nach einer Ausführungsform der Erfindung umfasst die untrennbare Verbindung des Sicherheitsmoduls mit der Vorrichtung ein mechanisches Verbinden derselben. Ein mechanisches Verbinden kann beispielsweise einen Lötvorgang, einen Schweißvorgang oder einen Klebevorgang von Sicherheitselement und Vorrichtung umfassen. Möglich ist auch eine dauerhafte mechanische Verriegelung des Sicherheitselements in der Vorrichtung. Im einfachsten Fall könnte das Sicherheitsmodul in einem Gehäuse der Vorrichtung eingegossen sein, sodass aufgrund des "Aufbrechens" dieser Gussverbindung die Zerstörung des Sicherheitsmoduls und/oder der Vorrichtung resultiert.

Vorzugsweise sollte dabei das mechanische Verbinden dergestalt erfolgen, dass ein nachträgliches Entfernen des Sicherheitsmoduls von der Vorrichtung zu einer zumindest teilweisen - vorzugweise automatischen - Funktionsunfähigkeit der Vorrichtung und/oder des Sicherheitsmoduls führt. Z.B. könnte die mechanische Kontaktierung zwischen Sicherheitselement und Vorrichtung so ausgebildet sein, dass beim nachträglichen Entfernen des Sicherheitsmoduls von der Vorrichtung zwangsläufig und automatisch auch elektrische Kontakte in der Vorrichtung und/oder dem Sicherheitsmodul irreparabel unterbrochen werden. Im Falle eines Lötvorgangs könnte die mechanische Kontaktierung zwischen Sicherheitselement und Vorrichtung dergestalt ausgebildet sein, dass beim "Herauslöten" des Sicherheitselements aufgrund der stattfindenden Wärmeentwicklung eine irreparable Zerstörung elektronischer Komponenten der Vorrichtung und/oder des Sicherheitsmoduls stattfindet. Vorzugsweise werden im Betrieb der Vorrichtung diese elektronischen Komponenten zwingend benötigt, um die Grundfunktionen der Vorrichtung inklusive der Übermittlung von Smart Meter Messdaten an Messstellenbetreiber und/oder Energieversorger zu gewährleisten.

Vorzugsweise tritt die Funktionsunfähigkeit der Vorrichtung und/oder des Sicherheitsmoduls automatisch im Falle eines nachträglichen Entfernens des Sicherheitsmoduls von der Vorrichtung spätestens nach erneuter Inbetriebnahme der Vorrichtung und/oder des Sicherheitsmoduls ein.

Nach einer Ausführungsform der Erfindung umfasst die teilweise Funktionsunfähigkeit eine dauerhafte Störung der Kommunikationsfähigkeit der Vorrichtung mit dem externen Computersystem. Wenn es sich bei dem externen Computersystem um einen Messstellenbetreiber und/oder Energieversorger handelt, wird dieser somit aufgrund mangelnder Kommunikationsfähigkeit feststellen, dass ein Problem bei der Vorrichtung vorliegt. In diesem Fall wird der Messstellenbetreiber und/oder Energieversorger sich automatisch um diese Vorrichtung bemühen, z.B. einen Techniker vor Ort die Vorrichtung überprüfen lassen. So können Manipulationen der Vorrichtung zuverlässig und schnell erkannt werden.

Nach einer Ausführungsform der Erfindung resultiert die teilweise Funktionsunfähigkeit aus einer mechanischen Zerstörung der Vorrichtung und/oder des Sicherheitsmoduls aufgrund des nachträglichen Entfernens.

Nach einer Ausführungsform der Erfindung wird durch das nachträgliche Entfernen ein elektronischer Deaktivierungsprozess auf der Vorrichtung und/oder dem Sicherheitsmodul gestartet, wobei die teilweise Funktionsunfähigkeit aus dem Deaktivierungsprozess resultiert. Dieser Deaktivierungsprozess kann Hardware und/oder Software gesteuert sein. Beispielsweise kann ein Modul der Vorrichtung eine regelmäßig Überprüfung auf das Vorhandensein des Sicherheitsmoduls vornehmen. Wird festgestellt, dass das Sicherheitsmodul entfernt wurde, kann daraufhin dieses Modul die Vorrichtung oder einzelne Funktionen der Vorrichtung, wie oben beschrieben, deaktivieren. Möglich ist auch, dass das Modul eine teilweise Selbstzerstörung ihrer elektrischen Schaltkreise oder Elemente initiiert.

Nach einer Ausführungsform der Erfindung wird aufgrund des Verbindens des Sicherheitsmoduls mit der Vorrichtung ein Verknüpfungsprozess auf der Vorrichtung und/oder dem Sicherheitsmodul gestartet, wobei die untrennbare Verbindung des Sicherheitsmoduls mit der Vorrichtung als Resultat des Verknüpfungsprozesses eine logische Verknüpfung des Sicherheitsmoduls mit der Vorrichtung umfasst. Unter einer logischen Verknüpfung wird dabei ein Software gesteuerter Prozess verstanden, welcher in eindeutiger Weise die Vorrichtung an das Sicherheitsmodul koppelt. Z.B. erfolgt die logische Verknüpfung über eine Kennung, welche Vorrichtung und Sicherheitsmodul miteinander verbindet. Dies kann eine Kennung sein, welche für Vorrichtung und Sicherheitsmodul identisch ist. Möglich ist aber auch, dass aus z.B. einer Geräte-ID der Vorrichtung und einer Modul-ID des Sicherheitsmoduls eine neue Kennung erzeugt wird, welche in eindeutiger Weise die Geräte-ID und die Modul-ID verknüpft. Möglich wäre hier ein Hash-Prozess über die Geräte-ID und die Modul-ID. Die Verwendung einer Kennung hat allgemein den Vorteil, dass Ausführungsformen ohne große mechanische Aufwendungen realisiert werden können, was eine hohe Kostenersparnis bewirkt.

Z.B. kann aufgrund der Verwendung einer Kennung sichergestellt werden, dass nicht nachträglich in unbefugter Weise der Gateway durch einen anderen Gateway ersetzt werden kann. Beispielsweise könnte dadurch unterbunden werden, dass einem Messstellenbetreiber Werte von einem "gehackten" Gateway zur Verfügung gestellt werden, welcher nur sporadisch mit entsprechenden Smart-Metern verbunden ist und damit eigentlich überhaupt keine reale Energieverbrauchserfassung durchführt.

Vorzugsweise kann für ein gegebenes Sicherheitsmodul nur einmal der Verknüpfungsprozess durchgeführt werden. Hierfür könnte ein interner Zähler des Sicherheitsmoduls verwendet werden, so dass eine mehrmalige - wie auch immer geartete - Verwendung des Sicherheitsmoduls z.B. in verschiedenen Vorrichtungen verhindert wird.

Nach einer Ausführungsform der Erfindung umfasst der Verknüpfungsprozess eine Übertragung der Kennung des Sicherheitsmoduls an die Vorrichtung und darauffolgend eine Irreversible Speicherung der durch die Vorrichtung empfangenen Kennung in der Vorrichtung. Z.B. erfolgt die Übertragung der Kennung zum Zeitpunkt der ersten Inbetriebnahme der mit dem Sicherheitsmodul verbundenen Vorrichtung automatisch. Damit ist sichergestellt, dass zum Einen jederzeit die Vorrichtung vor Inbetriebnahme mit aktuellen Sicherheitsmodulen ausgestattet werden kann, jedoch nach Inbetriebnahme eindeutig personalisiert ist.

Nach einer Ausführungsform der Erfindung ist die Kennung des Sicherheitsmoduls und/oder die irreversibel gespeicherte Kennung nicht veränderbar. Eine Veränderung der Kennung ist damit nur durch Austausch von Sicherheitsmodul und Vorrichtung möglich.

Nach einer Ausführungsform der Erfindung findet nach dem Verbinden des Sicherheitsmoduls mit der Vorrichtung eine regelmäßige automatische Überprüfung statt, ob die in dem Sicherheitsmodul gespeicherte Kennung mit der in der Vorrichtung gespeicherten Kennung noch identisch ist, wobei im Falle eines Identitätsmangels eine Mitteilung hierüber an das externe Computersystem übermittelt wird und/oder ein elektronischer Deaktivierungsprozess auf der Vorrichtung und/oder dem Sicherheitsmodul gestartet wird, wobei eine teilweise Funktionsunfähigkeit der Vorrichtung und/oder des Sicherheitsmoduls aus dem Deaktivierungsprozess resultiert. Dieser z.B. als Software oder Hardware implementierbare Deaktivierungsprozess wurde bereits oben beschrieben und kann in dieser Ausführungsform analog implementiert werden.

Die regelmäßige automatische Überprüfung kann zu festgelegten Zeitpunkten, zu zufälligen Zeitpunkten oder auch bei vordefinierten Ereignissen stattfinden. Ein vordefiniertes Ereignis könnte z.B. eine Übermittlung von mit dem Smart Meter erfassten Verbrauchsdaten über das Sicherheitsmodul an einen Messstellenbetreiber und/oder Energieversorger umfassen oder allgemein einen beliebigen Lesezugriff auf die erfassten Verbrauchsdaten durch externe Systeme. Externe Systeme können die Geräte im "Home Area Network" und im "Wide Area Network" sein.

Nach einer Ausführungsform der Erfindung handelt es sich bei der Vorrichtung um einen Smart Meter oder einen dem Smart Meter oder mehreren Smart Metern zugeordneten Smart Meter Gateway. Ein Gateway ist dabei einem Smart Meter zugeordnet, wenn der Smart Meter seine erfassten Energieverbrauchswerte über den Gateway einem Energieversorger oder Messstellenbetreiber zur Verfügung stellt. Der Gateway kann jedoch auch nur als die zentrale Kommunikationsschnittstelle für einen oder mehrere anschließbare Smart Meter wirken. Ob der Zugriff auf die durch die Smart Meter erfassen Messdaten indirekt über den Gateway auf die Smart Meter erfolgt, oder ob die Smart Meter die Messdaten im Gateway ablegen ist dabei unerheblich und beides möglich.

Nach einer Ausführungsform der Erfindung handelt es sich bei dem Sicherheitsmodul um eine Chipkarte.

Nach einer Ausführungsform der Erfindung handelt es sich bei der Kennung um einen öffentlichen Schlüssel des Sicherheitsmoduls und/oder eine IPv6-Adresse des Sicherheitsmoduls. Letzteres hat insbesondere den Vorteil, dass über die Kennung auch gleichzeitig eine eindeutige Adressierung des Sicherheitsmoduls und damit der Vorrichtung in Internet möglich ist. Dies könnte zur automatisierten Abfrage von mit den Smart Meter erfassten Verbrauchsdaten relevant sein. Die Verwendung des öffentlichen Schlüssels hat den Vorteil, dass hierdurch automatisch eine eindeutige und personifizierte Identifikation des Sicherheitsmoduls gewährleistet ist. Da vorzugweise ein Trust Center oder ein Trusted Service Manager auch gleichzeitig dem Sicherheitsmodul vertrauenswürdige Zertifikate zuordnen wird, ist von "offizieller Seite" sichergestellt, dass der hierzu benötigte öffentliche Schlüssel auch tatsächlich von dieser vertrauenswürdigen Stelle vergeben wurde. Die Echtheit des Schlüssels ist z.B. über öffentliche Verzeichnisserver überprüfbar. Die Verwendung von gefälschten Kennungen ist damit überprüfbar ausgeschlossen.

Möglich ist auch, dass es sich bei der Kennung um ein Zertifikat des Sicherheitsmoduls handelt. Das Zertifikat wiederum könnte den öffentlichen Schlüssel des Sicherheitsmoduls aufweisen. Dies hat zunächst den Vorteil, dass die Authentizität der Kennung durch Dritte überprüft werden kann. Ferner hat dies den Vorteil, dass das im Falle einer Kommunikation ohnehin zu übermittelnde Zertifikat dafür verwendet werden kann, um gleichzeitig eine eindeutige Identifizierung des Sicherheitsmoduls zu gewährleisten. Z.B. könnte zur Kommunikation von mit dem Smart Meter erfassten Messdaten grundsätzlich ein Challenge-Response-Verfahren zum Einsatz kommen, welches eine vorige gegenseitige Zertifikatsüberprüfung erfordert. Damit werden Zertifikate ohnehin verwendet, so dass die zusätzliche explizite und separate Übertragung von Kennungen entfällt.

Schließlich ist es auch möglich, dass die Kennung selbst in einem Zertifikat des Sicherheitsmoduls enthalten ist. Auch dadurch ist eine offizielle Nachprüfbarkeit der Echtheit der Kennung durch Dritte gewährleistet.

Grundsätzlich können die gesagten Zertifikate nach einem Public Key Infrastructure (PKI)-Standard erstellt worden sein, beispielsweise nach dem X.509-Standard. An dieser Stelle sei angemerkt, dass die beschriebenen Zertifikate auf einem öffentlichen Verzeichnisserver abgespeichert sein können.

In einem weiteren Aspekt betrifft die Erfindung ein Computerprogrammprodukt mit von einem Prozessor ausführbaren Instruktionen zur Durchführung der obig beschriebenen Verfahrensschritte.

In einem weiteren Aspekt betrifft die Erfindung ein Sicherheitsmodul zur Verwendung in dem obig beschriebenen Verfahren.

In einem weiteren Aspekt betrifft die Erfindung ein Smart Meter Vorrichtung zur Aufnahme einem obig beschriebenen Sicherheitsmodul.

Das Sicherheitsmodul und die Smart Meter Vorrichtung haben dabei analogen Fähigkeiten und Funktionalitäten, welche hinsichtlich des Verfahrens obig beschrieben wurden.

Es sei ferner angemerkt, dass vorzugsweise das Sicherheitsmodul beispielsweise in seinem Auslieferungszustand so konfiguriert ist, dass ausschließlich eine vertrauenswürdige Instanz in der Lage ist, eine Kommunikation nach erfolgreicher Authentifizierung mit dem Sicherheitsmodul durchzuführen. Diese vertrauenswürdige Instanz kann jene sein, welche das Sicherheitsmodul zuvor mit der Kennung versehen hat. Dadurch ist gewährleistet, dass insbesondere eine entgeltrelevante Konfiguration des Smart-Meterings nur einer solchen Stelle überlassen wird, welche sowohl von den autorisierten Markteilnehmern, das heißt zum Beispiel den Messstellenbetreibern und den eigentlichen Energieversorgern, als auch den Endverbrauchern als vertrauenswürdig eingestuft ist. Unter "entgeltrelevante Konfiguration" wird im Folgenden verstanden, dass durch diese Konfiguration bezüglich eines Smart-Meters festgelegt wird, wer zum Beispiel zur Abrechnung der durch das Smart-Meter erfassten Energiemengen berechtigt ist. Ferner kann dadurch auch festgelegt werden, welche Personen wie Endverbraucher und autorisierte Marktteilnehmer in welchem Umfang auf die Funktionen und bezüglich des Smart Meters verfügbaren Informationen überhaupt Zugriff haben dürfen. Da diese Festlegung von Seitens einer vertrauenswürdigen Stelle erfolgt, ist dadurch gewährleistet, dass ein Missbrauch dieser Funktionen und Informationen durch unbefugte Dritte ausgeschlossen ist. Die Informationen können dabei z.B. Standortinformationen des Smart Meters, durch das Smart Meter gemessene Werte, Standortinformationen des Speicherbereichs oder jegliche im Speicherbereich enthaltene Werte umfassen.

Nach einer Ausführungsform der Erfindung erfolgt eine Kommunikation über die Kommunikationsschnittstelle der Vorrichtung mit dem externen Computersystem durch eine gesicherte Übertragung, welche eine Ende-zu-Ende-Verschlüsselung zwischen dem Computersystem und dem Sicherheitsmodul verwendet. Dies ermöglicht es, die Verbindung zwischen dem Sicherheitsmodul und dem Computersystem über beliebige Netzwerke aufzubauen, da aufgrund der Ende-zu-Ende-Verschlüsselung keine Änderungen der über die Verbindung übertragenen Daten durch Dritte vorgenommen werden können. Allgemein kann die Erfindung dadurch realisiert werden, dass die gesamte Kommunikation zwischen dem Computersystem und dem Sicherheitsmodul über beliebige Arten von Netzwerken erfolgen kann. Dies umfasst eine Kommunikation über das Internet, eine Kommunikation durch drahtlose Netzwerkverbindungen wie beispielsweise Mobilfunk, als auch eine Kommunikation unter Verwendung einer Trägerfrequenzanlage. Letztere ist auch unter dem Namen: "Powerline Datenübertragung" bekannt und umfasst Vorrichtungen zur Datenübertragung über vorhandene Kommunikations- oder Stromnetze.

Im Folgenden werden bevorzugte Ausführungsformen der Erfindung anhand der Zeichnungen näher erläutert. Es zeigen:
- Figur 1: ein Blockdiagramm eines Systems zur Implementierung des obig beschriebenen Verfahrens,
- Figur 2: ein Flussdiagramm eines Verfahrens zur Personalisierung einer Smart Meter Vorrichtung,
- Figur 3: ein Flussdiagramm eines Verfahrens zur Überprüfung einer Personalisierung einer Smart Meter Vorrichtung,
- Figur 4: ein Blockdiagramm eines Smart Meter Systems,
- Figur 5: ein Flussdiagramm eines Verfahrens zur Initialisierung eines Speicherbereichs,

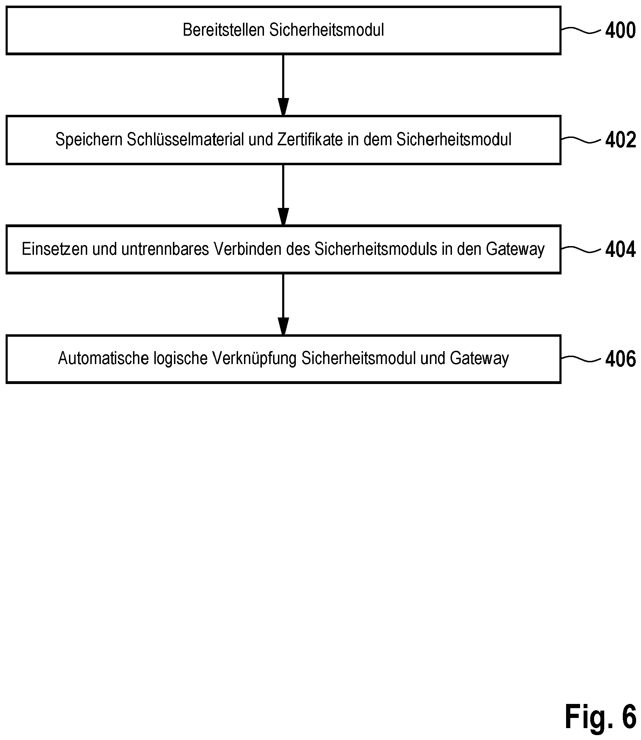

- Figur 6: ein Flussdiagramm eines Verfahrens zur Bereitstellung eines Sicherheitsmoduls.

Im Folgenden werden einander ähnliche Elemente mit gleichen Bezugszeichen gekennzeichnet.

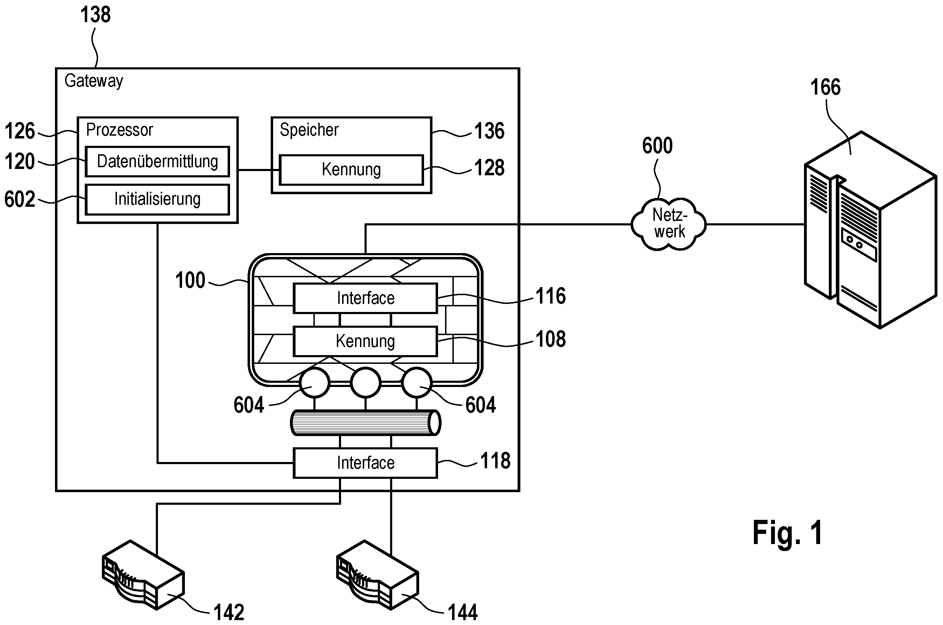

Die Figur 1 zeigt ein Blockdiagramm eines Systems zur Implementierung eines Verfahrens zur Personalisierung einer Smart Meter Vorrichtung mit einem Sicherheitsmodul. Im Folgenden sei davon ausgegangen, dass es sich bei der Smart Meter Vorrichtung um einen Smart Meter Gateway 138 handelt, welcher an Smart Meter 142, 144 über die Schnittstelle (Interface) 118 gekoppelt ist. Ein Sicherheitsmodul 100 dient als Kommunikationsschnittstelle des Gateways 138 mit einem externen Computersystem 166. Die Kommunikation erfolgt dabei über eine Schnittstelle (Interface) 116 des Sicherheitsmoduls 100. Z.B. handelt es sich bei dem Computersystem um das System eines Messstellenbetreibers und/oder eines Energieversorgers, welcher mit den Smart Metern 142, 144 erfasste Energieverbrauchsdaten vergebühren möchte. Die Datenübermittlung wird dabei z.B. durch das Softwaremodul 120 des Prozessors 126 des Gateways 138 gesteuert.

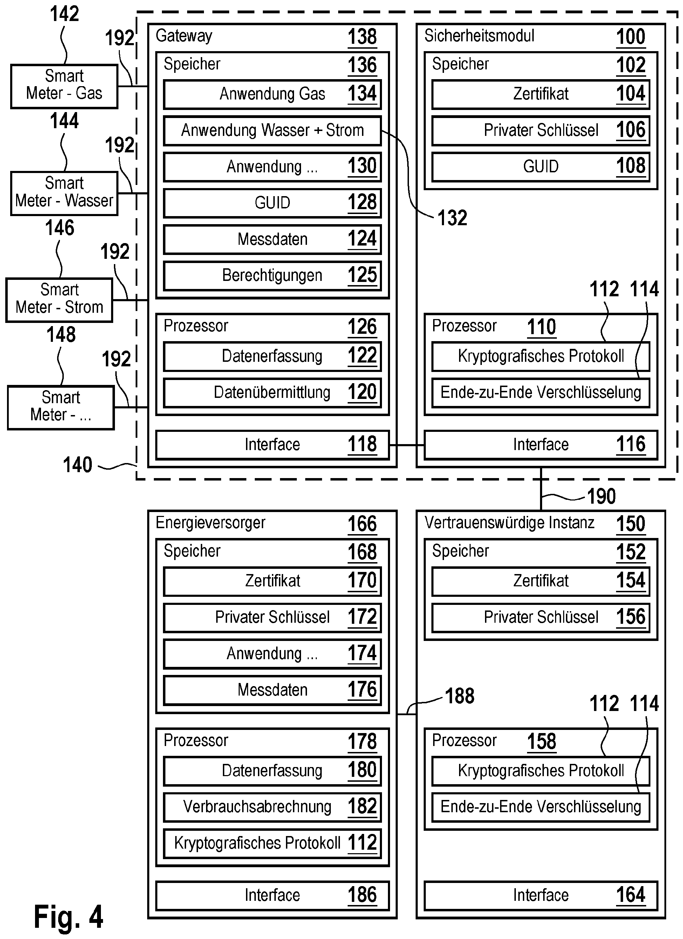

Das Sicherheitsmodul 100 kann über das Netzwerk 600, z.B. eine Powerline Verbindung oder das Internet mit dem Computersystem 166 kommunizieren. Ebenso ist eine Kommunikation über die Schnittstelle 116 mit dem Computersystem 150 der Fig. 4 möglich. Dies ist weiter unten detailliert beschrieben.

In dem Sicherheitsmodul 100 ist eine eindeutige Kennung 108 gespeichert. Das Sicherheitsmodul 100 wird z.B. in Form einer Chipkarte oder eines integrierten Schaltkreises IC, ASIC oder "Chip" vorpersonalisiert, d.h. mit Kennung 108 und hier nicht näher beschriebenem kryptografischen Schlüsselmaterial ausgestattet bereitgestellt. Dieses Schlüsselmaterial wird in Figur 4 näher beschrieben.

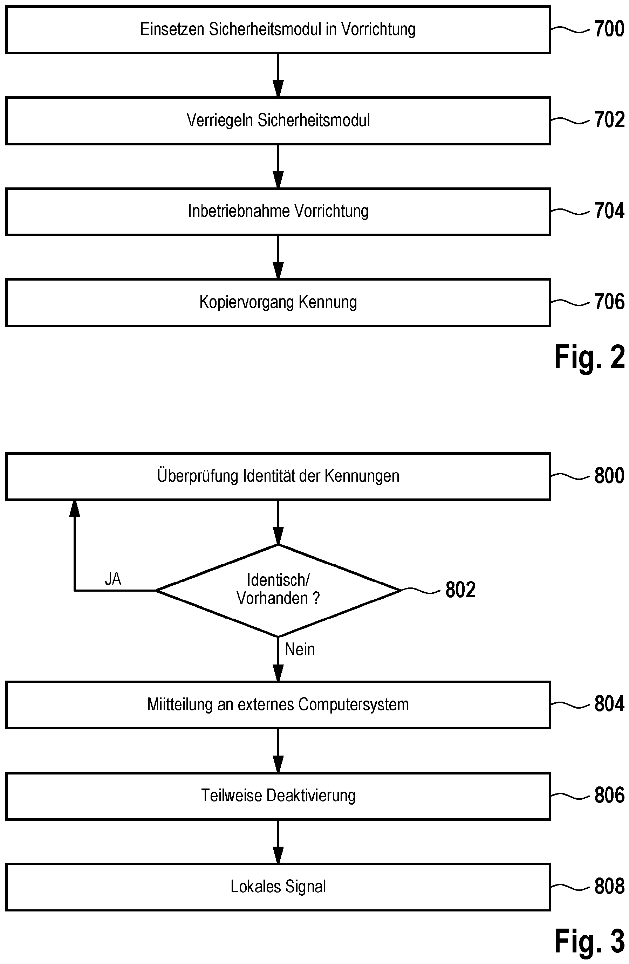

Das Sicherheitsmodul wird gemäß den in Fig. 2 beschriebenen Verfahrensschritten in Schritt 700 in den Gateway 138 eingesetzt. Der Gateway stellt hierfür eine entsprechende mit Kontakten 604 versehene Aufnahme für das Sicherheitsmodul 100 bereit. Über die Kontakte 604 kann der Prozessor 126 des Gateways 138 mittels der Schnittstelle 118 mit dem Sicherheitsmodul über dessen nicht näher gezeigten gegenstückigen Kontakte kommunizieren.

Nach dem Einsetzen des Sicherheitsmoduls 100 in Schritt 700 erfolgt vorzugsweise in Schritt 702 ein mechanisches Verriegeln des Sicherheitsmoduls in dem Gateway 138. Dadurch ist es nicht mehr möglich, ohne Zerstörung der Kontakte 604 das Sicherheitsmodul nachträglich vom Gateway 138 zu entfernen. Damit ist automatisch auch die Kennung 108 des Sicherheitsmoduls dem Gateway 138 zugeordnet.

Die Schritte 704 und 706 sind optional und könnten statt des mechanischen Verriegelungsprozesses oder zusätzlich hierzu verwendet werden. In Schritt 704 erfolgt die Inbetriebnahme des Gateways 138, wodurch automatisch in Schritt 706 ein Kopiervorgang der Kennung 108 von dem Sicherheitsmodul auf einen Speicherbereich 136 des Gateways 138 initiiert wird. Durch den Kopiervorgang wird eine Kopie 128 der Kennung 108 in dem Speicher 136 abgelegt. Der Kopiervorgang kann beispielsweise über Programminstruktionen 602 beim erstmaligen Inbetriebnehmen, d.h. Initiieren des Gateways 138 gesteuert werden.

So ergibt sich durch die beschriebenen Schritte ein untrennbares Verbinden des Sicherheitsmoduls 100 mit dem Gateway 138, wobei nach dem Verbinden der Gateway durch die eindeutige Kennung 128 identifizierbar ist.

Die Figur 3 zeigt ein Flussdiagramm eines Verfahrens zur Überprüfung einer Personalisierung einer Smart Meter Vorrichtung, im vorliegenden Fall des Gateways 138 aus Figur 1. Z.B. kann das Modul 120 bei jedem Datenübermittlungsvorgang von Energieverbrauchsdaten an den Computer 166 über die Schnittstellen 118 und 116 in Schritt 800 eine Überprüfung durchführen, ob die Kennungen 128 und 108 identisch sind oder ob überhaupt eine Kennung 108 vorhanden ist. Würde nämlich das Sicherheitsmodul 100 durch ein anderes Sicherheitsmodul ausgetauscht werden, würden die Kennungen 128 und 108 nicht mehr übereinstimmen. Da die Kennung 128 vorzugsweise irreversibel im Speicher 136 gespeichert ist, kann durch den Austausch des Sicherheitsmoduls nicht ohne Weiteres die Kennung 128 durch eine andere ersetzt werden.

Die Überprüfung auf das Vorhandensein einer Kennung ist erforderlich, wenn lediglich eine untrennbare mechanische Verbindung zwischen Sicherheitsmodul und Gateway 138 besteht. Würde das Sicherheitsmodul entfernt werden, könnte eine Deaktivierung jener Funktion zur Abfrage der Kennung seitens des Gateways sicherstellen, dass der Gateway 138 keine Informationen mehr über jedwede Kennungen erhält. Dies entspricht dann dem Zustand des Nicht-Vorhandenseins einer Kennung.

Wird in Schritt 802 festgestellt, dass die Kennungen identisch sind, springt das Verfahren zurück zu Schritt 800 und wird quasi in einer Schleife erneut, ggfs. zeitlich getriggert, durchgeführt.

Wird hingegen in Schritt 802 festgestellt, dass die Kennung 108 entweder nicht vorhanden oder aber keine Identität zwischen den Kennungen 108 und 128 besteht, können die Schritte 804 - 808 durchgeführt werden. Schritt 804 umfasst dabei die Mitteilung des vermutlichen Vorliegens einer Manipulation oder Fehlfunktion an ein externes Computersystem, z.B. das System 166 in Fig. 1. Schritt 806 umfasst die teilweise Deaktivierung der Funktionen des Gateways, so dass insbesondere ein Energieversorger oder Messstellenbetreiber selbständig die Manipulation aufgrund z.B. fehlerhafter übermittelter Daten oder gar des Ausbleibens von Datenübermittlungen feststellen kann.

Schritt 808 ist ebenfalls optional und umfasst das Ausgeben eines lokalen Signals am Gateway, so dass ein Benutzer optisch oder akustisch in der Lage ist, eine eingetretene teilweise Funktionsunfähigkeit zu erkennen. Ein an den Gateway 138 angeschlossener lokaler Computer des Endverbrauchers könnte ebenfalls mittels des Signals in Schritt 808 hierüber informiert werden.

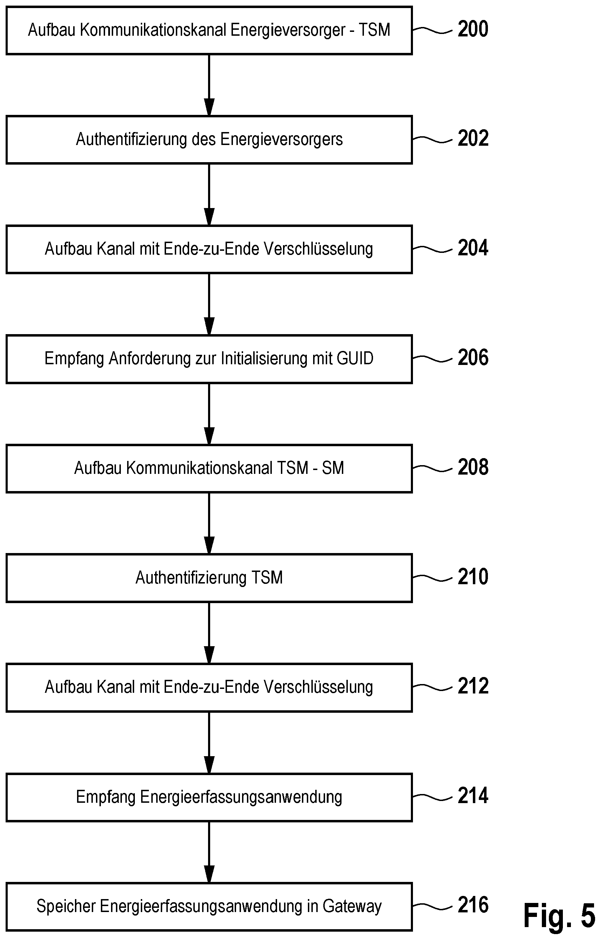

Die Figur 4 zeigt das Blockdiagramm der Fig. 1 in detaillierter Form. Zusammen mit den in Figur 5 gezeigten Verfahrensschritten soll im Folgenden ohne der Beschränkung der Allgemeinheit gezeigt werden, wie ein Speicherbereich 136 eines Gateways 138, welcher einer Vielzahl von Smart-Metern 142, 144, 146, 148 zugeordnet ist, initialisiert werden kann. Dieser Initialisierungsprozess dient dabei in Verbindung mit der obig beschriebenen Personalisierung dazu, Endverbrauchern und Energieversorgern eine komfortable Möglichkeit der Kommunikation von Energieverbrauchsdaten in sicherer Weise zur Verfügung zu stellen. Durch den beschriebenen Initialisierungsvorgang kann in sicherer, eindeutiger und nachvollziehbarer Weise eine Möglichkeit bereitgestellt werden, welche eine sichere Kommunikation zwischen den Smart-Metern und einem autorisierten Marktteilnehmer wie einem Energieversorger oder einem Messstellenbetreiber ermöglicht. Vorzugsweise handelt es sich dabei bei dem beschriebenen Computersystem 150 um ein Computersystem einer vertrauenswürdigen Instanz, welche auch als "Trusted Service Manager" oder "TSM" bezeichnet wird.

Die Smart-Meter 142 - 148 dienen der Erfassung verschiedener Energieverbrauchswerte bezüglich zum Beispiel Gas (Smart-Meter 142), Wasser (Smart-Meter 144), Strom (Smart-Meter 146) und weiteren nicht näher spezifizierten Energieformen (Smart-Meter 148). Die Smart-Meter sind dabei über entsprechende Kommunikationsverbindungen 192 mit dem Interface 118 des Gateways 138 verbunden.

Es sei nun davon ausgegangen, dass das Sicherheitsmodul 100 bereits fest und untrennbar mit dem Gateway 138 verbunden ist, sodass insgesamt durch die Kombination des Gateways 138 und des Sicherheitsmoduls 100 eine untrennbare Einheit 140 gegeben ist. Der Gateway 138 und das Sicherheitsmodul 100 kommunizieren über jeweilige Interfaces 118 bzw. 116 miteinander. Über das Interface 116 findet ferner eine Kommunikation mit autorisierten Markteilnehmern und dritten Personen bzw. Instanzen statt, welche nicht innerhalb des durch die Einheit 140 und den Smart-Metern 142 - 148 gebildeten Netzwerks befindlich sind. Die Kommunikation zwischen Interface 116 des Sicherheitsmoduls 100 und weiteren Kommunikationsteilnehmern erfolgt dabei über eine Kommunikationsverbindung 190. Hierbei kann es sich beispielsweise um eine Powerline-Verbindung oder eine Kommunikationsverbindung über ein mobiles Telekommunikationsnetz oder das Internet handeln.

Das Sicherheitsmodul 100 hat einen elektronischen Speicher 102 mit geschütztem Speicherbereich 106 und 108. Der geschützte Speicherbereich 106 dient zur Speicherung eines privaten Schlüssels des Sicherheitsmoduls 100 und der Speicherbereich 108 dient zur Speicherung der Kennung des Sicherheitsmoduls "GUID" (Globally Unique Identifier). Bei dem GUID kann es sich beispielsweise um eine IPv6-Adresse des Sicherheitsmoduls 100 handeln.

Der elektronische Speicher 102 kann ferner einen Speicherbereich 104 zur Speicherung eines Zertifikats aufweisen. Das Zertifikat beinhaltet einen öffentlichen Schlüssel, der dem in dem geschützten Speicherbereich 106 gespeicherten privaten Schlüssel zugeordnet ist. Das Zertifikat kann nach einem Public Key Infrastructure (PKI)-Standard erstellt worden sein, beispielsweise nach dem X.509-Standard.

Das Zertifikat muss nicht zwangsläufig mit dem elektronischen Speicher 102 des Sicherheitsmoduls 100 gespeichert sein. Alternativ oder zusätzlich kann das Zertifikat auch in einem öffentlichen Verzeichnisserver gespeichert sein.

Das Sicherheitsmodul 100 hat einen Prozessor 110 zur Ausführung von Programminstruktionen 112 und 114. Durch Ausführung der Programminstruktionen 112 "kryptografisches Protokoll" wird beispielsweise eine Authentifizierung einer vertrauenswürdigen Instanz 150 oder eines Energieversorgers 166 gegenüber dem Sicherheitsmodul 100 ermöglicht. Bei dem kryptografischen Protokoll kann es sich beispielsweise um ein Challenge-Response-Protokoll basierend auf einem symmetrischen Schlüssel oder einem asymmetrischen Schlüsselpaar handeln.

Möglich ist natürlich auch eine gegenseitige Authentifizierung von Sicherheitsmodul und vertrauenswürdiger Instanz bzw. Energieversorger.

Die Programminstruktionen 114 dienen zur Ende-zu-Ende-Verschlüsselung von zwischen dem Sicherheitsmodul 100 und der vertrauenswürdigen Instanz 150 bzw. dem Energieversorger 166 zu übertragenden Daten. Für die Ende-zu-Ende-Verschlüsselung kann ein symmetrischer Schlüssel verwendet werden, der beispielsweise anlässlich der Ausführung des kryptografischen Protokolls zwischen dem Sicherheitsmodul 100 und den weiteren Teilnehmern 150 bzw. 166 vereinbart wird.

Ähnlich wie das Sicherheitsmodul 100 weist auch die vertrauenswürdige Instanz 150 den bereits beschriebenen elektronischen Speicher 152 und einen geschützten Speicherbereich 156 zur Speicherung eines privaten Schlüssels der vertrauenswürdigen Instanz auf. In dem Speicher 152 kann auch noch ein Zertifikat 154 der vertrauenswürdigen Instanz enthalten sein. Dieses Zertifikat kann jedoch ebenfalls auf einem zentralen Zertifikatserver gespeichert sein.

Ein Prozessor 158 der vertrauenswürdigen Instanz 150 weist wiederum die obig bezüglich des Sicherheitsmoduls 100 beschriebenen Programminstruktionen 112 und 114 zur Implementierung eines kryptografischen Protokolls und zur Durchführung einer Ende-zu-Ende-Verschlüsselung auf. Das kryptografische Protokoll und die Ende-zu-Ende-Verschlüsselung können zur Kommunikation über das Interface 164 mit dem Energieversorger 166 oder mit dem Sicherheitsmodul 100 verwendet werden. Das Zertifikat 154 beinhaltet wiederum einen öffentlichen Schlüssel, der dem in dem geschützten Speicherbereich 156 gespeicherten privaten Schlüssel zugeordnet ist.

Bei dem "Energieversorger" 166 handelt es sich um ein Computersystem des Energieversorgers, welches wiederum einen elektronischen Speicher 168 und einen Prozessor 178 aufweist. Ferner ist diesem Computersystem ein Interface 186 zugeordnet, über welches eine Kommunikation mit der vertrauenswürdigen Instanz 150 bzw. dem Sicherheitsmodul ermöglicht wird.

Der elektronische Speicher 168 des Energieversorgers 166 weist einen geschützten Speicherbereich 172 mit einem privaten Schlüssel auf, wobei der private Schlüssel einem öffentlichen Schlüssel zugeordnet ist, welcher in einem Zertifikat 170 ebenfalls im elektronischen Speicher 168 enthalten ist. Ferner ist im Speicher 168 ein Speicherbereich für eine oder mehrere Anwendungen vorgesehen, wobei diese Anwendungen beispielsweise eine entgeltrelevante Konfiguration des Gateways 138 ermöglichen. Ebenfalls im elektronischen Speicher 168 können Messdaten 176 gespeichert sein, welche zuvor von dem Gateway 138 empfangen wurden.

Der Prozessor 178 weist Programminstruktionen 180 zur Erfassung der durch den Gateway 138 gelieferten Verbrauchsdaten und des Weiteren optional zur Ausführung von Verfahrensschritten zur Verbrauchsabrechnung in Abhängigkeit von den ermittelten Messdaten (Programminstruktionen 182) auf. Die Programminstruktionen zur Ausführung von Schritten eines kryptografischen Protokolls 112 sowie nicht gezeigte Programminstruktionen zur Durchführung einer Ende-zu-Ende-Verschlüsselung können ebenfalls vorgesehen sein, wobei durch diese Programminstruktionen eine sichere Kommunikation mit der vertrauenswürdigen Instanz 150 bzw. dem Sicherheitsmodul 100 ermöglicht wird.

Soll nun ein Neukunde dem Energieversorger 166 zugeordnet werden, könnte beispielsweise nach einer ersten Installation der Smart-Meter 142 - 148 und der Bereitstellung von Gateway 138 mit Sicherheitsmodul 102 ein Initialisierungsvorgang des Sicherheitsmoduls stattfinden. Dieser Initialisierungsvorgang könnte dadurch angestoßen werden, dass der Neukunde (ein Endverbraucher) oder eine bestimmte technische Instanz, welche die Smart-Meter installiert hatte, dem Energieversorger 166 eine entsprechende Mitteilung hierüber erstatten. Diese Mitteilung sollte vorzugsweise die GUID 108 des Sicherheitsmoduls 100 umfassen, da dadurch eine eindeutige Identifizierung des Sicherheitsmoduls 100 gegenüber dem Energieversorger 166 möglich ist.

Nachdem der Energieversorger 166 diese Mitteilung über sein Interface 186, beispielsweise über eine Webschnittstelle einer entsprechende Webseite erhalten hat, baut der Energieversorger 166 einen Kommunikationskanal zur vertrauenswürdigen Instanz 150 auf. Dieser Schritt ist in Figur 5 mit Bezugszeichen 200 bezeichnet. Die vertrauenswürdige Instanz kann hierbei beispielsweise ein sogenannter "Trusted Service Manager TSM" sein, also eine behördlich zertifizierte Instanz, welche in elektronischen Kommunikationsprozessen die jeweilige Identität des Kommunikationspartners bescheinigt.

Nach dem Aufbau des Kommunikationskanals in Schritt 200 erfolgt eine Authentifizierung des Energieversorgers 166 im Schritt 202. Hierzu wird das Zertifikat 170 des Energieversorgers durch die vertrauenswürdige Instanz 150 überprüft. Beispielsweise kann die vertrauenswürdige Instanz 150 bei positiver Zertifikatsüberprüfung ein Challenge-Response-Verfahren durchführen, bei welchem eine Zufallszahl erzeugt wird, welche mit einem im Zertifikat 170 beinhalteten öffentlichen Schlüssel des Energieversorgers 166 verschlüsselt wird und an den Energieversorger 166 übermittelt wird. Der Energieversorger 166 kann daraufhin mit seinem privaten Schlüssel 172 die Zufallszahl entschlüsseln und im Klartext zurücksenden. Stimmt die nun von der vertrauenswürdigen Instanz 150 empfangene Zufallszahl mit der zuvor beschriebenen Zufallszahl überein, ist die Authentizität des Energieversorgers 166 tatsächlich gesichert.

Nach Durchführung des Schritts 202 und dem optionalen Challenge-Response-Verfahren kann daraufhin in Schritt 204 ein Kanal mit Ende-zu-Ende-Verschlüsselung über die Kommunikationsverbindung 188 zwischen Energieversorgung 166 und der vertrauenswürdigen Instanz 150 aufgebaut werden. Hierbei können die Programminstruktionen 114 des Prozessors 158 der vertrauenswürdigen Instanz zum Einsatz kommen.

Nach Aufbau des Kanals in Schritt 204 empfängt die vertrauenswürdige Instanz 150 in Schritt 206 eine Anforderung zum Aufspielen einer Energieerfassungsanwendung 174 des Energieversorgers 166 und dem Speicher 136 des Gateways 138. Um den Speicher 136 bzw. den Gateway 138 eindeutig zu spezifizieren, wird mit der Anforderung zur Initialisierung des Speichers 136 auch die GUID 128 des Gateways 138, welche im Speicher 136 enthalten ist, an die vertrauenswürdige Instanz übermittelt. Vorzugsweise ist die GUID 128 des Speichers 136 identisch mit der GUID 108 des Speichers 102 des Sicherheitsmoduls 100.

Mit Empfang der GUID in Schritt 206 ist die vertrauenswürdige Instanz 150 in der Lage, eindeutig den gewünschten Gateway 138 zur Aufspielung der Anwendung 174 zu adressieren. Hierzu baut in einem nächsten Schritt 208 die vertrauenswürdige Instanz 150 über die Kommunikationsverbindung 190 einen Kommunikationskanal zum Sicherheitsmodul 100 auf. Die vertrauenswürdige Instanz 150 authentifiziert sich gegenüber dem Sicherheitsmodul 100, wobei die Authentifizierung nebst einer Überprüfung des Zertifikats 154 durch das Sicherheitsmodul beispielsweise wiederum ein Challenge-Response-Verfahren seitens des Sicherheitsmodul 100 umfasst. Hierzu könnte das Sicherheitsmodul 100 wiederum eine Zufallszahl erzeugen, mit dem öffentlichen Schlüssel der vertrauenswürdigen Instanz 150 verschlüsseln und an die vertrauenswürdige Instanz 150 senden. Die vertrauenswürdige Instanz 150 würde die verschlüsselte Zufallszahl mit ihrem privaten Schlüssel 156 entschlüsseln und die entschlüsselte Zufallszahl im Klartext zurück an das Sicherheitsmodul 100 senden. Stellt das Sicherheitsmodul fest, dass die so empfangene entschlüsselte Zufallszahl mit der ursprünglich seinerseits verschlüsselten Zufallszahl übereinstimmt, ist eine Authentifizierung der vertrauenswürdigen Instanz gegeben.

Das Verfahren setzt sich dann in Schritt 212 fort, nämlich den Aufbau eines Kommunikationskanals mit Ende-zu-Ende-Verschlüsselung zwischen der vertrauenswürdigen Instanz 150 und dem Sicherheitsmodul 100. Dies kann wiederum durch Verwendung der Programminstruktionen 114 des Prozessors 110 des Sicherheitsmoduls 100 erfolgen.

Im Schritt 214 empfängt das Sicherheitsmodul 100 die Energieerfassungsanwendung 174 von der vertrauenswürdigen Instanz.

An dieser Stelle sei angemerkt, dass es vorteilhaft sein kann, wenn beispielsweise die vertrauenswürdige Instanz die am häufigsten verschickten Energieerfassungsanwendungen in einem lokalen Speicher der vertrauenswürdigen Instanz vorrätig hält, sodass es nicht notwendig ist, bei Erschließung neuer Kunden ständig die Anwendungen 174 von dem Energieversorger 166 an die vertrauenswürdige Instanz 150 zu übertragen.

Nach Empfang der Energieerfassungsanwendung in Schritt 214 speichert das Sicherheitsmodul 100 die Anwendung in dem Speicher 136 des Gateways 138. Handelt es sich bei der Anwendung 174 beispielsweise um eine Anwendung, um Energieverbrauch bezüglich Wasser und Strom zu erfassen, so wird die Anwendung als die Anwendung 132 im Speicher 136 abgelegt. Diese Anwendung ist in der Lage, Energieverbrauchsdaten vom Smart-Meter 144 zu verarbeiten. Analog hierzu kann der Speicher 136 entsprechende Anwendungen für die Energieerfassung von Gas (134) sowie weitere Anwendungen 130 für die Erfassung weiterer Energieformen umfassen. Das Speichern der Energieerfassungsanwendung durch das Sicherheitsmodul 100 im Gateway 138 ist in Figur 2 durch den Schritt 216 gekennzeichnet.

Zusätzlich zu dem Empfang der Energieerfassungsanwendung in Schritt 214 durch das Sicherheitsmodul 100 ist es auch möglich, dass von der vertrauenswürdigen Instanz 150 Energieversorger-spezifische Berechtigungen oder genaue Spezifizierungen von Netzdatenelementen empfangen werden, welche ebenfalls in einem weiteren Bereich 125 des Speichers 136 abgelegt werden. Diese Berechtigungen oder Spezifizierungen von Messdatenelementen ermöglichen es, im Voraus festzulegen, welche Informationen der Energieversorger 166 von dem Gateway 138 überhaupt erhalten darf. Hierzu ist es beispielsweise möglich, dass vorab von der vertrauenswürdigen Instanz 150 für jeden Energieversorger spezifische Berechtigungen definiert werden, welche global für alle Energieversorger 166 gelten und welche grundsätzlich mit der Übertragung von Energieerfassungsanwendungen dem Sicherheitsmodul und damit dem Gateway 138 übermittelt werden.

Ebenfalls möglich ist es, dass Konfigurationsdaten von der vertrauenswürdigen Instanz 150 erhalten werden. Diese Konfigurationsdaten können dabei die technische Konfiguration der Smart Meter und/oder des Gateways betreffen.

Mittels der Programminstruktionen zur Datenerfassung 122 des Prozessors 126 ist nun der Gateway 138 in der Lage, Messdaten bezüglich eines Energieverbrauchs beispielsweise von dem Smart-Meter 144 und dem Smart-Meter 146 zu erfassen. Die entsprechenden Messdaten werden in dem Speicherbereich 124 des Speichers 136 abgelegt. Grundsätzlich bestehen die Messdaten 124 aus verschiedenen Messdatenelementen, welche beispielsweise umfassen können: Zeitpunkt der Erfassung der Messdaten, einzelne Messdatenpunkte zum jeweiligen Zeitpunkt, Informationen über das Zustandekommen der Messdaten (zum Beispiel Stromstärke, Spannung, Wasserdruck, Wassertemperatur, Gasdruck). Die Messdaten 124 können über die Anwendungen 130, 132 und 134 einer weiteren Auswertung unterzogen werden, woraus sich ausgewertete Messdaten ergeben, welche ebenfalls als "Messdatenelemente" im Speicherbereich 124 abgelegt werden können. Beispielsweise kann es sich bei den ausgewerteten Messdaten um akkumulierte Energieverbrauchswerte handeln.

Die obig beschriebenen Berechtigungen 125 bzw. die Spezifizierungen der Messdatenelemente ermöglichen es, von vornherein festzulegen, welche dieser Messdatenelemente 124 der Energieversorger 126 überhaupt abrufen darf. Ferner ermöglicht dies, von vornherein festzulegen, wie detailliert ein solches Abrufen erlaubt ist. Ein so detailliertes und zeitgenaues Abrufen der Messdaten 124 könnte dabei unerwünscht sein, da sich durch kurze Zeitintervalle von Messungen Erkenntnisse der Nutzung von elektronischen Geräten gewinnen und dadurch Benutzerprofile erstellt werden können, woran ein Endkunde jedoch gegebenenfalls kein Interesse haben könnte.

Wie bereits oben erwähnt, sind das Sicherheitsmodul 100 und der Gateway 138 untrennbar miteinander verbunden. Beispielsweise bilden diese eine bauliche Einheit 140, wie dies in Figur 1 schematisch gezeigt ist. Um diese Einheit 140 zu erzeugen, könnten die in dem Flussdiagramm der Figur 4 nochmals vereinfacht erläuterten Verfahrensschritte durchgeführt werden.

In Schritt 400 wird zunächst das Sicherheitsmodul 100 bereitgestellt. Daraufhin erfolgt in Schritt 402 das Speichern von Schlüsselmaterial und von Zertifikaten in dem Sicherheitsmodul. Beispielsweise könnte hierzu das Sicherheitsmodul eine entsprechende kryptografische Einheit aufweisen, mittels welcher selbständig der private Schlüssel 106 erzeugt wird. Alternativ ist es auch möglich, dass die vertrauenswürdige Instanz den privaten Schlüssel erzeugt und in dem Sicherheitsmodul in einem von außen nicht zugänglichen Speicherbereich ablegt. Der zu dem privaten Schlüssel gehörende öffentliche Schlüssel wird dem Zertifikat beigelegt, welches dann durch die vertrauenswürdige Instanz signiert wird und in dem Speicher 102 des Sicherheitsmoduls abgelegt wird.

Daraufhin wird das Sicherheitsmodul in Schritt 404 in das Gateway beispielsweise in Form einer Chipkarte eingesetzt und es wird ein untrennbares Verbinden von Sicherheitsmodul und Gateway vorgenommen. Beispielsweise könnten Sicherheitsmodul und Gateway elektronisch so aneinander gekoppelt werden, dass ein Entfernen des Sicherheitsmoduls vom Gateway zum automatischen Zerstören des Sicherheitsmoduls führen würde.

Nach Einsetzen des Sicherheitsmoduls in den Gateway 404 erfolgt im Schritt 406 eine automatische logische Verknüpfung von Sicherheitsmodul 100 und Gateway 138. Beispielsweise könnte dies dadurch erfolgen, dass die GUID 108 des Sicherheitsmoduls irreversibel in den Speicher 136 des Gateways 138 als GUID 128 geschrieben wird. Hierbei sollte seitens zum Beispiel des Sicherheitsmoduls 100 sichergestellt sein, dass eine Kommunikation mit dem Gateway 138 zur Bereitstellung von Messdatenelementen und über den Energieversorger 166 nur dann stattfindet, wenn eine Identität der GUID 108 und 128 gegeben ist.

### Bezugszeichenliste

- 100: Sicherheitsmodul
- 102: Speicher
- 104: Zertifikat
- 106: privater Schlüssel
- 108: GUID
- 110: Prozessor
- 112: kryptographisches Protokoll
- 114: Ende-zu-Ende-Verschlüsselung
- 116: Interface
- 118: Interface
- 120: Datenübermittlung
- 122: Datenerfassung
- 124: Messdaten
- 125: Berechtigung
- 126: Prozessor
- 128: GUID
- 130: Anwendung
- 132: Anwendung
- 134: Anwendung
- 136: Speicher
- 138: Speicher
- 140: Einheit
- 142: Smart-Meter
- 144: Smart-Meter
- 146: Smart-Meter
- 148: Smart-Meter
- 150: vertrauenswürdige Instanz
- 152: Speicher
- 154: Zertifikat
- 156: privater Schlüssel
- 158: Prozessor
- 164: Interface
- 166: Energieversorger
- 168: Speicher
- 170: Zertifikat
- 172: privater Schlüssel
- 174: Anwendung
- 176: Messdaten
- 178: Prozessor
- 180: Datenerfassung
- 182: Verbrauchsabrechnung
- 186: Interface
- 188: Kommunikationsverbindung
- 190: Kommunikationsverbindung
- 192: Kommunikationsverbindung
- 600: Netzwerk
- 602: Modul
- 604: Anschlüsse

## Patentansprüche

1. Smart Meter Vorrichtung (138) mit einem Sicherheitsmodul (100), wobei es sich bei der Vorrichtung um einen einem Smart Meter zugeordneten Smart Meter Gateway (138) handelt, wobei das Sicherheitsmodul (100) als Kommunikationsschnittstelle des Gateways (138) mit einem externen Computersystem (166; 150) ausgebildet ist, wobei in dem Sicherheitsmodul (100) eine IPv6-Adresse (108) des Sicherheitsmoduls (100) zur eindeutigen Adressierung des Sicherheitsmoduls (100) im Internet gespeichert ist, wobei der Gateway (138) eine mit Kontakten (604) versehene Aufnahme für das Sicherheitsmodul (100) umfasst, wobei die Kontakte (604) zum Kommunizieren eines Prozessor (126) des Gateways (138) mittels einer Schnittstelle (118) mit dem Sicherheitsmodul (100) über gegenstückige Kontakte des Sicherheitsmoduls (100) konfiguriert sind, wobei das in den Gateway (138) eingesetzte Sicherheitsmodul (100) in dem Gateway (138) mechanisch verriegelt ist, wodurch es nicht mehr möglich, ohne Zerstörung der Kontakte (604) des Gateways (138) das Sicherheitsmodul (100) nachträglich von dem Gateway (138) zu entfernen, wobei die Verbindung von Sicherheitsmodul (100) und Gateway (138) den Gateway (138) mit derselben Identität versieht, die auch dem Sicherheitsmodul (100) zugewiesen ist, und nach dem Verbinden der Gateway (138) durch die IPv6-Adresse (108) des Sicherheitsmoduls (100) identifizierbar ist,
wobei der Gateway (138) durch die IPv6-Adresse (108) in beliebigen Kommunikationsnetzwerken eindeutig identifizierbar ist,
wobei der Gateway (138) zum Schutz gegen ein Austauchen des Sicherheitsmoduls (100) durch ein anderes Sicherheitsmodul dazu konfiguriert ist,
bei jedem Datenübermittlungsvorgang von Energieverbrauchsdaten an das externe Computersystem (166; 150) eine Überprüfung durchzuführen, ob eine IPv6-Adresse (108) vorhanden ist,
im Falle eines Entfernens des Sicherheitsmoduls (100) durch eine Deaktivierung einer Funktion zur Abfrage der IPv6-Adresse (108) seitens des Gateways (138) sicherzustellen, dass der Gateway (138) keine Informationen mehr über jedwede IPv6-Adresse erhält, wobei dies einem Zustand eines Nicht-Vorhandenseins einer IPv6-Adresse zum Identifizieren des Gateways entspricht.

2. Smart Meter Vorrichtung (138) nach Anspruch 1, wobei die Manipulation aufgrund von Daten, die infolge der teilweisen Deaktivierung der Funktionen des Gateways (138) fehlerhaft übermittelt werden, durch einen Energieversorger oder Messstellenbetreiber selbstständig feststellbar ist.

3. Smart Meter Vorrichtung (138) nach einem der vorangehenden Ansprüche, wobei der Gateway (138) zum Schutz gegen ein Austauchen des Sicherheitsmoduls (100) durch ein anderes Sicherheitsmodul ferner dazu konfiguriert ist, ein lokales Signal auszugeben, so dass ein Benutzer optisch oder akustisch in der Lage ist, die eingetretene teilweise Funktionsunfähigkeit zu erkennen.

4. Smart Meter Vorrichtung (138) nach Anspruch 3, wobei der Gateway (138) zum Schutz gegen ein Austauchen des Sicherheitsmoduls (100) durch ein anderes Sicherheitsmodul ferner dazu konfiguriert ist, ein an den Gateway (138) angeschlossenen lokalen Computer eines Endverbrauchers mittels des lokalen Signals ebenfalls über die eingetretene teilweise Funktionsunfähigkeit zu informieren.

## Claims

1. A smart meter device (138) with a security module (100), wherein the device is a smart meter gateway (138) associated with a smart meter, wherein the security module (100) is configured as a communication interface of the gateway (138) with an external computer system (166; 150), wherein an IPv6 address (108) of the security module (100) for uniquely addressing the security module (100) on the Internet is stored in the security module (100), wherein the gateway (138) comprises a receptacle, provided with contacts (604), for the security module (100), wherein the contacts (604) are configured for communication between a processor (126) of the gateway (138), by means of an interface (118), and the security module (100) via counterpart contacts of the security module (100), wherein the security module (100) inserted into the gateway (138) is mechanically locked in the gateway (138), whereby it is no longer possible to remove the security module (100) subsequently from the gateway (138) without destroying the contacts (604) of the gateway (138), wherein the connection of security module (100) and gateway (138) provides the gateway (138) with the same identity that is also assigned to the security module (100), and following the connection the gateway (138) is identifiable by the IPv6 address (108) of the security module (100),
wherein the gateway (138) is uniquely identifiable by the IPv6 address (108) in any communication networks, wherein the gateway (138), for protection against a replacement of the security module (100) by another security module, is configured
with each data transmission operation of energy consumption data to the external computer system (166; 150), to perform a check to ascertain whether an IPv6 address (108) is present,
in the event of a removal of the security module (100) by a deactivation of a function to query the IPv6 address (108) on the part of the gateway (138), to ensure that the gateway (138) no longer obtains information about any IPv6 address, wherein this corresponds to a state of absence of an IPv6 address for identification of the gateway.

2. The smart meter device (138) according to claim 1,
wherein the manipulation on account of data transmitted defectively as a result of the partial deactivation of the functions of the gateway (138) is determinable automatically by an energy supplier or meter operator.

3. The smart meter device (138) according to any one of the preceding claims, wherein the gateway (138) for protection against a replacement of the security module (100) by another security module is further configured to output a local signal so that a user is optically or acoustically able to identify the partial functional incapacity that has occurred.

4. The smart meter device (138) according to claim 3,
wherein the gateway (138) for protection against a replacement of the security module (100) by another security module is further configured, by means of the local signal, to also inform a local computer of an end consumer about the partial functional incapacity that has occurred, said computer being connected to the gateway (138) .

## Revendications

1. Dispositif de compteur intelligent (138) avec un module de sécurité (100), dans lequel le dispositif est une passerelle de compteur intelligent (138) associée à un compteur intelligent, dans lequel le module de sécurité (100) est configuré sous forme d'une interface de communication de la passerelle (138) avec un système informatique externe (166 ; 150), dans lequel une adresse IPv6 (108) du module de sécurité (100) pour attribuer une adresse unique au module de sécurité (100) sur Internet est stockée dans le module de sécurité (100), dans lequel la passerelle (138) comprend un réceptacle, pourvu de contacts (604), pour le module de sécurité (100), dans lequel les contacts (604) sont configurés pour la communication entre un processeur (126) de la passerelle (138), au moyen d'une interface (118), et le module de sécurité (100) par le biais de contacts de contrepartie du module de sécurité (100), dans lequel le module de sécurité (100) inséré dans la passerelle (138) est verrouillé mécaniquement dans la passerelle (138), moyennant quoi il n'est plus possible de retirer le module de sécurité (100) ultérieurement de la passerelle (138) sans détruire les contacts (604) de la passerelle (138), dans lequel la connexion du module de sécurité (100) et de la passerelle (138) fournit à la passerelle (138) la même identité que celle qui est également assignée au module de sécurité (100), et après la connexion la passerelle (138) est identifiable par l'adresse IPv6 (108) du module de sécurité (100),
dans lequel la passerelle (138) est identifiable de manière unique par l'adresse IPv6 (108) dans n'importe quel réseau de communication,
dans lequel la passerelle (138), pour la protection contre un remplacement du module de sécurité (100) un autre module de sécurité, est configurée
avec chaque opération de transmission de données de consommation d'énergie au système informatique externe (166 ; 150), pour réaliser un contrôle afin de s'assurer si une adresse IPv6 (108) est présente,
dans le cas d'un retrait du module de sécurité (100) par une désactivation d'une fonction pour interroger l'adresse IPv6 (108) sur la partie de la passerelle (138), pour garantir que la passerelle (138) n'obtient plus d'informations sur quelque adresse IPv6 que ce soit, dans lequel ceci correspond à un état d'absence d'une adresse IPv6 pour identification de la passerelle.

2. Dispositif de compteur intelligent (138) selon la revendication 1, dans lequel la manipulation pour le compte de données transmises de manière défectueuse suite à désactivation partielle des fonctions de la passerelle (138) peut être déterminée automatiquement par un fournisseur d'énergie ou un opérateur du compteur.

3. Dispositif de compteur intelligent (138) selon l'une quelconque des revendications précédentes, dans lequel la passerelle (138) pour protection contre un remplacement du module de sécurité (100) par un autre module de sécurité est en outre configurée pour émettre un signal local de telle sorte qu'un utilisateur est optiquement ou acoustiquement capable d'identifier l'incapacité fonctionnelle partielle qui s'est produite.

4. Dispositif de compteur intelligent (138) selon la revendication 3, dans lequel la passerelle (138) pour protection contre un remplacement du module de sécurité (100) par un autre module de sécurité est en outre configurée, au moyen du signal local, pour également informer un ordinateur local d'un consommateur final au sujet de l'incapacité fonctionnelle partielle qui s'est produite, ledit ordinateur étant connecté à la passerelle (138).
